# FASCICULE DE BREVET EUROPEEN

(11) **EP 2 695 443 B1**
(45) Date de publication et mention de la délivrance du brevet: **18.10.2017**
(21) Numéro de dépôt: 12713975.6
(22) Date de dépôt: 10.04.2012
(51) Int. Cl.: H04W 40/24, H04W 40/02, H04W 28/02, H04B 7/155, H04W 84/18, H04L 12/721

(54) **PROCEDE POUR OPTIMISER LES CAPACITES D'UN RESEAU DE TELECOMMUNICATION DE TYPE AD- HOC**
VERFAHREN ZUR OPTIMIERUNG DER KAPAZITÄTEN EINES AD-HOC-TELEKOMMUNIKATIONSNETZES
METHOD FOR OPTIMIZING THE CAPABILITIES OF AN AD HOC TELECOMMUNICATION NETWORK

(30) Priorité: 08.04.2011 FR 1101090
(43) Date de publication de la demande: 12.02.2014
(73) Titulaire: THALES, 92400 Courbevoie (FR)
(72) Inventeur: BOURDELLES, Michel, F-92230 GENNEVILLIERS (FR); PEGA, Stéphane, F-92230 GENNEVILLIERS (FR)
(74) Mandataire: Dudouit, Isabelle
(86) Numéro de dépôt international: PCT/EP2012/056406
(87) Numéro de publication internationale: WO 2012/136840

(56) Documents cités:
- KANO S ET AL: "Route switching protocol for network coding in ad hoc networks", COMMUNICATIONS AND ELECTRONICS (ICCE), 2010 THIRD INTERNATIONAL CONFERENCE ON, IEEE, PISCATAWAY, NJ, USA, 11 août 2010 (2010-08-11), pages 55-60, XP031837228, ISBN: 978-1-4244-7055-6
- SONG HAN ET AL: "Coding-Aware Multi-path Routing in Multi-Hop Wireless Networks", PERFORMANCE, COMPUTING AND COMMUNICATIONS CONFERENCE, 2008. IPCCC 2008. IEEE INTERNATIONAL, IEEE, PISCATAWAY, NJ, USA, 7 décembre 2008 (2008-12-07), pages 93-100, XP031404383, ISBN: 978-1-4244-3368-1
- XIN WEI ET AL: "Network Coding Aware Routing Protocol for Lossy Wireless Networks", WIRELESS COMMUNICATIONS, NETWORKING AND MOBILE COMPUTING, 2009. WICOM '09. 5TH INTERNATIONAL CONFERENCE ON, IEEE, PISCATAWAY, NJ, USA, 24 septembre 2009 (2009-09-24), pages 1-4, XP031553545, ISBN: 978-1-4244-3692-7
- KATTI S ET AL: "XORs in the Air: Practical Wireless Network Coding", IEEE / ACM TRANSACTIONS ON NETWORKING, IEEE / ACM, NEW YORK, NY, US, vol. 14, no. 3, 1 juin 2008 (2008-06-01), pages 497-510, XP011226939, ISSN: 1063-6692
- ROYER E M ET AL: "A REVIEW OF CURRENT ROUTING PROTOCOLS FOR AD HOC MOBILE WIRELESS NETWORKS", IEEE PERSONAL COMMUNICATIONS, IEEE COMMUNICATIONS SOCIETY, US, vol. 6, no. 2, 1 avril 1999 (1999-04-01), pages 46-55, XP000823968, ISSN: 1070-9916, DOI: DOI:10.1109/98.760423
- KANO S ET AL: "Route switching protocol for network coding in ad hoc networks", COMMUNICATIONS AND ELECTRONICS (ICCE), 2010 THIRD INTERNATIONAL CONFERENCE ON, IEEE, PISCATAWAY, NJ, USA, 11 August 2010 (2010-08-11), pages 55-60, XP031837228, ISBN: 978-1-4244-7055-6

## Description

L'invention concerne un procédé pour optimiser l'adaptation de routes de communication dans un réseau de télécommunication composé de noeuds de communications sans fil, avec transfert d'informations par relais entre noeuds. Cette optimisation permet, notamment, d'augmenter les capacités de communication au sein d'un réseau auto-organisé de type MANET (abréviation anglo-saxonne de « Mobile Ad-Hoc Network ») présent notamment dans les réseaux radio. Il s'agit d'une optimisation en débit par réduction du nombre d'envoi de paquets de trafic, sans augmentation de taille de donnée de ces paquets.

Elle s'applique, par exemple, pour optimiser les capacités d'un réseau de communications ad-hoc par factorisation de paquets à transmettre par connaissance de la topologie de voisinage d'un réseau. Le procédé proposé permet d'identifier des modifications de routes de flots existants à appliquer afin de réaliser des optimisations par codage réseau. Elle peut aussi être utilisée pour des réseaux ayant une infrastructure à noeuds mobiles.

Le problème technique posé dans la présente invention est le problème rencontré à l'utilisation/adaptation du codage réseau dans des topologies de réseau ad-hoc, sur des multi-flots avec une modification de routage de flots existants, ces flots s'établissant de façon synchronisés ou non synchronisés dans le temps.

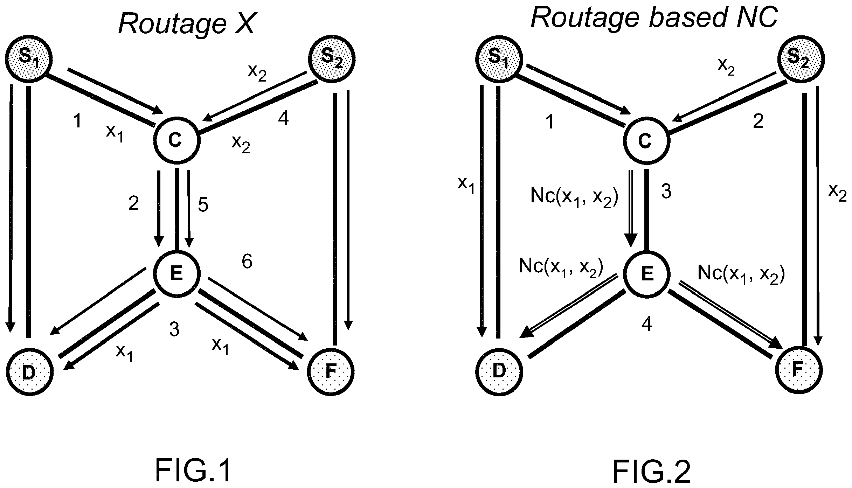

Une des manières d'opérer est d'utiliser le procédé de codage réseau connu sous l'expression anglo-saxon » network coding ». L'intérêt du « network coding », à savoir relayer une combinaison linéaire de paquets reçus au lieu de relayer les paquets séparément est explicité dans les figures 1 et 2.

La figure 1 présente un exemple de routage sans utilisation de l'optimisation par codage réseau dans une même topologie papillon que celle de la figure 2. Sur cet exemple on voit que le flot X₁ transite par les émissions de paquets étiquetés 1, 2, 3, et que le flot X₂ transite par les émissions de paquets étiquetés 4, 5, 6. Cela conduit à un nombre total d'émissions de 6 pour transmettre un paquet des 2 flots et une occupation en ressources important sur les noeuds C et E qui transmettent les paquets des 2 flots.

L'exemple donné à la figure 2 permet, en transmettant la combinaison d'un flot X₁ et d'un flot X₂ émis respectivement par deux sources différentes, de réduire le nombre de paquets à relayer.

Dans cet exemple, les noeuds sources S₁ et S₂ réalisent des communications de données vers les noeuds destination D et F, soit directement pour la communication S₁ vers D et S₂ vers F, soit par relais avec les liens C et E pour les communications de S₁ vers F et S₂ vers D. Le principe général du codage réseau consiste à combiner linéairement les paquets des trafics relayés par C et E, afin de réduire le débit de communication sur ces noeuds.

La combinaison linéaire proposée dans l'exemple de la figure 2 se fait par application de la fonction binaire xor bit à bit, conduisant à Nc(X₁, X₂), donc sans augmentation de la taille des paquets transmis, sachant que chacun des noeuds D et F ont déjà reçu les données par voie directe, respectivement des flots X₁ et X₂. Ces noeuds pourront donc extraire les informations respectivement de ces flots X₁ et X₂. Sur cette figure on remarque qu'il n'y a que quatre envois 1, 2, 3 et 4. La communication se fait par diffusion. L'envoi d'un même paquet à plusieurs voisins est de même coût en débit que l'envoi à un seul voisin.

On remarque que, par rapport à un routage optimal sans utilisation d'optimisation par codage réseau dans cette topologie particulière présentée en figure 1, l'utilisation du codage réseau sur la même topologie présentée en figure 2 conduit à un gain de débit de 33%. Cela induit un gain en consommation et une optimisation de l'allocation de ressources (noeuds C et E).

Le document intitulé « route switching protocol for network coding in ad hoc networks », communications and electronics (ICCE), 2010, thrid international conference on, IEEE, Piscataway, NJ, USA, 11 août 2010 traite du problem de collision de parquets. Il ne mentionne pas la construction d'une liste et de noeud pivot.

L'un des objectifs du procédé selon l'invention est de proposer un protocole qui permet de déterminer les meilleures routes de transmissions de flots de données sur différentes situations topologiques d'un réseau de communication.

La demande de brevet EP 2 141 865 divulgue un procédé permettant de combiner le routage avec le codage réseau. Lors de l'établissement d'un flot, le procédé consiste à compter le nombre de liens communs avec d'autres flots en enrichissant les informations de requête de route RREQ d'un routage réactif. Dans ce document, il n'y a pas de modification de la route de flots existants, la détermination de la route se fait flot par flot, sans une vue globale d'ensemble de flots.

Avant de donner des exemples permettant de mieux comprendre l'invention, quelques définitions utiles à la description sont listées ci-après:
- Un noeud (ou poste radio) est un des éléments atomiques du réseau. Un noeud a la capacité, par une signalisation appropriée connue de l'Homme de métier de détecter son voisinage réseau (c'est à dire l'ensemble des noeuds du réseau avec qui il peut émettre et recevoir des informations sans noeud relais). Ce noeud assure une capacité d'allocation de ressources radio permettant de transmettre des flots de trafics à ses noeuds voisins ; un noeud a la capacité de recevoir des paquets de données de ces noeuds voisins, de les décoder et mémoriser des informations, de réaliser des traitements algorithmiques, de transmettre des paquets à ses noeuds voisins, avec une possibilité de sélectionner un ensemble de ses voisins pour la transmission de données. Les liaisons de connexion entre deux noeuds sont considérées comme bidirectionnelles (les noeuds ont connaissance l'un de l'autre et ont alloué de la ressource de manière à établir des trafics et échanger des messages dans les deux sens de la connexion);
- Un noeud est dit «noeud source » s'il est émetteur d'un flot de données; comme il va être décrit dans la suite de la description du procédé, cette notion de noeud source peut être étendue aux noeuds avec un lien stable avec le noeud source, ainsi qu'aux noeuds émetteur de récepteur d'un flot ;
- Un noeud est dit noeud destinataire lorsqu'il est destinataire d'un ou de plusieurs flots; comme il sera décrit dans la suite de la description, cette notion de noeud destinataire est étendue aux noeuds de transit ou destinataire de flots de données avec un lien stable avec le ou les noeuds destinataires pour lequel il relaye le flot. Dans ce cas, le noeud destinataire réel peut être destinataire d'un seul flot. L'extension de noeud destinataire s'applique aussi aux noeuds émetteurs de récepteur d'un flot ;
- La notion de stabilité s'entend en termes de stabilité du lien de communication pendant l'exécution du ou des flots de données expression connue de l'Homme du métier;
- Un noeud de transit ou intermédiaire est équipé de moyens de réception et d'émission des flots de données ;
- Un noeud « pivot » est un noeud de transit identifié comme ayant la capacité de coder par codage réseau les flots qu'il reçoit et d'émettre ce flot codé;
- Un noeud précédent est un noeud qui est situé en amont du noeud concerné dans un parcours d'un chemin menant à un noeud origine d'un trafic;
- Le mot trafic désigne un transfert de donnée réalisé entre deux noeuds du réseau; le trafic s'effectue par transmission de paquets de données entre les noeuds;
- L'établissement de trafic se réalise par établissement au préalable d'une route constituée d'une suite de noeuds de communications. Le premier élément est le noeud source, d'autres noeuds dont le dernier sont les noeuds destinataires, les autres noeuds sont des noeuds relais. Chacun des noeuds a la capacité de communiquer directement avec les noeuds adjacents de la suite;
- Un protocole de routage est un protocole qui permet de déterminer une route et de configurer chacun des noeuds de manière à relayer les paquets de trafic. L'implantation d'un tel protocole n'est pas considérée comme un pré requis pour l'utilisation de l'invention pour l'établissement d'une communication, mais peut être utilisée dans la phase 1 de l'invention, pour lequel des parcours similaires sont réalisés, notamment pour le protocole « Routage avec Vecteur de Distance à la Demande" connu sous l'abréviation anglo-saxonne AODV (Ad hoc On-demand Distance Vector) ;
- Les mots flot ou flux sont ici synonymes de trafic. Il est possible d'associer un identifiant Id distinct à chaque flot (par exemple à partir de l'identifiant du noeud source qui initie le flot);
- Un réseau ad hoc est une expression connue de l'Homme du métier qui désigne un réseau dans lequel les noeuds s'auto-organisent et qui établissent des routes de flots communication en utilisant par exemple un protocole de routage ;
- Le terme "table" signifie un ensemble d'éléments. Ces éléments peuvent être des identifiants de flot, des nombres indiquant une distance d'un noeud vers un noeud source ou destinataire ou encore un noeud intermédiaire ;
- Un flot codé est généré par une fonction de codage. Il est possible, dans le cas de codage de 2 flots, d'utiliser la fonction XOR;
- La valeur NN pour un flot, relatif à un noeud du réseau est le nombre de noeuds sur un chemin ou une route qui relie le noeud source du flot à ce noeud;
- Chaque noeud intermédiaire maintient à jour une table de flots qui comprend tous les flots actifs qui transitent à travers ce noeud. Le flot entrant contient une entrée pour chaque flot actif contenant les informations (identifiant du flot, saut précédent, prochain saut, nombre de flots....) ;
- Les noeuds ont la possibilité de mémoriser les deux derniers paquets reçus des flots qui transitent par ces noeuds;
- Les noeuds ont la possibilité de mémoriser un nombre de messages Mtopo (définis dans la suite de la description), pendant une durée de temps à spécifier. Cette capacité est obligatoire sur les noeuds initiaux de trafic et optionnelle sur les noeuds relais ;
- Les noeuds ont la capacité de recevoir des requêtes d'établissement de trafic, liées à un flot, avec des directives sur le chemin d'établissement du flot, ainsi que sur l'établissement de codage réseau pour certains des noeuds du chemin. Ces messages MflowEstab sont définis plus loin dans la description ;
- Un entête des paquets de données identifient de manière distincte le flot, le paquet du flot.

Le procédé selon l'invention reporte les informations pour une prise de décision de codage réseau et de re-routage de flots existants au niveau de noeuds origines de ces trafics permettant l'application de codage réseau, par exemple de type Networkcoding, à titre illustratif et nullement limitatif.

Le principe mis en oeuvre consiste notamment à mixer les approches codage réseau et routage de réseaux ad-hoc afin d'adapter les choix de routage en fonction de la potentialité de gains par utilisation de codage réseau par identification des situations topologiques où il peut être utilisé.

L'invention concerne un procédé pour optimiser l'adaptation de routes de communication dans un réseau sans fil composé de noeuds de communications, ledit réseau comprenant plusieurs noeuds Ni, la transmission de données de trafic s'effectuant sous la forme de flots Xi et entre au moins deux noeuds sources Ns et au moins deux noeuds destinataires Nd, comportant les étapes suivantes :
- étape 1, une étape de diffusion d'un premier message M d'un noeud source Si, Ns, vers tous les autres noeuds Ni du réseau, pour la découverte de plusieurs chemins Ci ou routes susceptibles d'être utilisés,
- sur réception du message M un noeud Ni du réseau mémorise pour chacun des flot Xi qu'il reçoit, la distance NN du noeud Ni par rapport au noeud source Ns ou au noeud précédent émetteur dudit flot Xi, afin de générer une table Tf pour chaque parcours Ci de chemin initié par le noeud source Ns de chaque flot Xi venant de ses noeuds voisins, la distance au noeud source et l'identifiant Id du noeud voisin,
- étape 2, chaque noeud destinataire Nd de flots Xi, transmet des messages Mtopo à chacun des noeuds voisins candidats à être relais de plusieurs flots Xi, lesdits messages contenant des informations obtenues par exploitation des informations de la table de stockage des informations collectées à l'étape 1,
le procédé est caractérisé en ce qu'il comporte au moins les étapes suivantes :
- étape 3, chacun des noeuds Ni recevant les flots Xi transmet aux noeuds voisins lesdites informations contenues dans un message Mtopo, lesdites informations étant transmises de gré à gré en identifiant les chemins Ci sur lesquels un codage réseau pourra être appliqué,
- un noeud E s'identifie comme noeud pivot, s'il reçoit d'au moins un premier noeud voisin destinataire D un premier flot X₁ , d'un deuxième noeud destinataire F différent du premier noeud destinataire D un deuxième flot X₂, , le premier flot et le deuxième flot étant contenus dans une liste **Lf** de flotset s'il émet sur des chemins distincts des flots codés et sur réception d'un deuxième message émis par le deuxième noeud destinataire D, ledit noeud transmet aux noeuds associés aux flots dans Tf un message Mp information qu'un noeud E est noeud pivot Np, ledit noeud pivot transmettant son identifiant Idp aux autres noeuds en utilisant un protocole de routage,
- étape 4, les identifiants correspondant aux noeuds qui se sont identifiés comme noeuds pivots sont transmis aux noeuds sources Ns qui vont prévenir les noeuds destinataires en utilisant le protocole de routage,
- puis les noeuds sources Ns prennent la décision de réaliser un changement de flots ou de trafics et de proposer à un ou plusieurs noeuds pivots d'utiliser du codage réseau à au moins deux flots afin de générer un seul flot pour la transmission à un noeud destinataire.

Un message Mtopo contient, par exemple, au moins les éléments suivants:
- Une liste **Lf** de flots;
- Une liste **Lp** de liste de flots optimisables par codage réseau;
- Une liste LBidir des flots de Lp bidirectionnels
- Une liste FirstCod du premier noeud auquel appliquer un codage réseau
- Une liste **Nd** de liste de noeuds destinataires;
- Une liste **Ln** des noeuds parcourus, permettant de coder des arborescences avec des étiquettes indiquant le début d'une arborescence et fin du chemin de l'arborescence,
- Une liste Ltf des flots entièrement parcourus dans des chemins de l'arborescence Ln.
- Des informations collectées permettant de déterminer le choix des routes.

Les informations collectées comportent, par exemple, au moins les éléments suivants :
- Les distances des chemins **Ld,**
- Des chemins codables **Ldp** par codage réseau.

Dans le cas d'une transmission des informations bidirectionnelle ledit procédé comporte, par exemple, une étape au cours de laquelle il y a mémorisation des paquets transmis pour codage et décodage sur les noeuds relais.

Selon une variante de mise en oeuvre, le procédé comporte des phases de mémorisation, codage et décodage de paquets de trafic sur une topologie de réseau de flots bidirectionnels entre 2 noeuds du réseau, lors de l'établissement des communications avec optimisation par codage réseau.

Un noeud source ou noeud initial S₂ du flot X₂ peut déléguer sa capacité d'annoter la liste **Lft** des flots traversés à un autre noeud.

Un noeud destinataire ou final F délègue, par exemple, à un autre noeud F₁ duquel peuvent transiter plusieurs flots, sa capacité de transmettre des messages.

Le procédé comporte, par exemple, la possibilité de choisir entre plusieurs chemins pivots en utilisant un choix déterministe ou en profitant d'une opportunité de 2 chemins pivots pour transférer deux flots.

Un noeud source transmet des directives d'optimisation d'allocation de ressources à chacun des noeuds du réseau.

L'invention concerne aussi une architecture de réseau permettant d'optimiser l'adaptation de routes de communication dans un réseau composé de noeuds de communications sans fil, ledit réseau mettant en oeuvre un algorithme de routage, ledit réseau comprenant plusieurs noeuds Ni, la transmission de données s'effectuant entre au moins deux noeuds sources Ns et au moins deux noeuds destinataires Nd, lesdits noeuds Ns, Nd, Ni disposant de moyens émetteur, récepteur et des moyens de traitement des informations mettant en oeuvre les étapes du procédé décrit ci-dessus.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un exemple de routage selon l'antérieur et la figure 2 un exemple de mise en oeuvre du codage Network coding selon l'art antérieur,
- La figure 3 présente un réseau avec la même topologie de connexion que celui de la figure 1 dans lequel le flot X₁ est établi avec une route (S1-D-E-F) sans codage réseau différent mais de même coût que l'arborescence de routes de la figure 1 (S1-C-E ; E-D ; E-F) du noeud S₁ vers les noeuds destinataires D et F, le noeud S₂ souhaite établir un flot X₂ vers les noeuds destinataires D et F.
- La figure 4, une représentation de la première étape selon l'invention,
- La figure 5, une représentation de la deuxième étape du procédé,
- La figure 6, une représentation de la troisième étape du procédé,
- La figure 7, une représentation de la quatrième étape du procédé,
- La figure 8, une représentation de la cinquième étape du procédé,
- La figure 9 présente une topologie dite de trafics bidirectionnels avec routage des trafics sans codage réseau,
- La figure 10 présente la topologie de la figure 9 avec application de l'optimisation par codage réseau,
- Les figures 11a, 11b, 11c présentent les étapes du protocole afin de transmettre aux noeuds origines l'information permettant de décider si une optimisation par codage réseau est applicable,
- Les figures 12, 13 et 14 décrivent l'établissement d'un codage réseau avec mémorisations de paquets de données sur les noeuds relais dans une topologie trafics bidirectionnels,
- La figure 15 présente une topologie dans lequel 2 chemins d'optimisation de codage réseau sont possibles,
- La figure 16 illustre la notion de noeud final par délégation, et
- La figure 17 illustre la notion de noeud initial par délégation.

Afin de mieux faire comprendre le principe mis en oeuvre par le procédé et le système selon l'invention, la description qui suit est donnée dans un cadre non limitatif avec deux noeuds sources et deux noeuds destinataires.

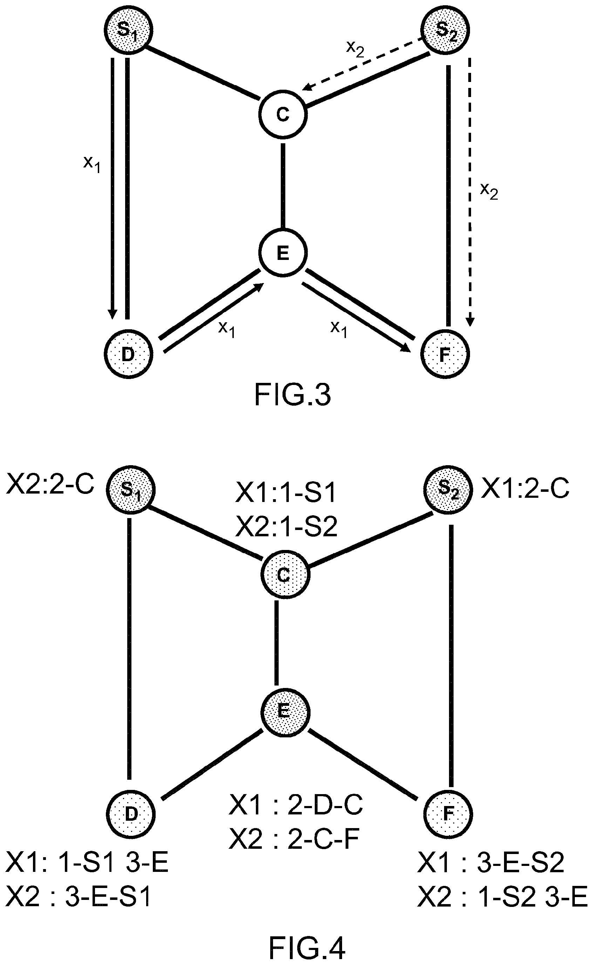

La figure 3 est une première représentation d'un réseau ad hoc dans lequel un premier flot établi X₁ représenté en trait plein qui circule d'un premier noeud source S₁ vers un noeud destinataire D, puis va ensuite vers un deuxième noeud destinataire F via un noeud intermédiaire E.

Le problème qui se pose est d'optimiser le choix des routes lorsqu'il y a une autre demande de flot représentée sur la figure 3 par un deuxième flot X₂ en trait pointillé, initié par un deuxième noeud source S₂ vers les noeuds destinataires D et F, afin d'obtenir la situation optimisée de la figure 2.

On sait qu'un noeud comporte :
a) d'une part des informations et protocoles connus de l'homme du métier pour les noeuds de ce type de réseau:
   - un identifiant Id distinct (typiquement l'adresse MAC ou IP (Internet Protocol) du réseau connus de l'Homme du métier)
   - un moyen d'émission E, un moyen de réception R vers un ensemble de voisins à un bond identifiés, l'invention se basant sur des topologies avec des liens entre voisins permettant de recevoir et d'envoyer des messages (liens bidirectionnels).
   - une connaissance par un protocole de signalisation des noeuds voisins à un bond, et le maintien de la connexion avec ceux-ci avec une capacité d'établissement de sessions de transmission de données (communication d'un flot de donnée) sur ces voisins, ainsi que d'envois de messages de signalisation, parmi lesquels les messages Mtopo et MflowEstab définis par l'invention. Ces capacités sont typiques d'une pile protocolaire de réseau ad hoc connu de l'homme du métier.
b) d'autre part des informations complémentaires propres à l'utilisation du procédé selon l'invention :
   - Tf:une table qui associe à des identifiants de flots, un nombre ainsi qu'une liste d'identifiants de noeuds du réseau,
   - Une mémorisation des messages Mtopo dans un espace de mémorisation borné,
   - Une mémorisation des 2 derniers paquets reçus de flots, dans le cas d'application de l'invention à des topologies avec flots bidirectionnels,

Un noeud destinataire Nd comporte des moyens de décodage des flots codés qu'il reçoit, ainsi que les noeuds pivots de flots dit bidirectionnels.

Un noeud intermédiaire lorsqu'il sera désigné noeud pivot aura des moyens de codage des informations.

### Etape 1 - détection de la distance d'un noeud origine dans un parcours de type diffusion - figure 4

La figure 4 représente la mise en oeuvre de la première étape du procédé selon l'invention en considérant deux flots X₁ et X₂ établis. Lors de la première étape, les noeuds sources diffusent les flots à tous les noeuds du réseau en utilisant par exemple la technique connue sous l'expression « anglo-saxonne » technique de flooding. Pour cela il est possible d'utiliser un algorithme de type Dijkstra [décrit par exemple dans l'article Numerische Mathematik 1, 269-271 - 1959 «A note on two problems in connexion with graphs » par E.W.Dijkstra paru] qui peut être borné à un nombre exprimé en nombre de « sauts » par noeuds relais. La technique d'acheminement par inondation est basée sur un principe simple consistant pour chaque noeud à retransmettre le paquet reçu sur toutes les voies de sortie du noeud, à l'exception de la voie d'arrivée. Cette étape est aussi réalisée par les protocoles de routage (notamment AODV) lors de la recherche d'une route. Lors de cette première étape chaque noeud Ni stockera dans une table Tf, pour chaque parcours Ci de chemin initié par le noeud source Ns de chaque flot Xi venant de ses noeuds voisins, la distance NN du noeud Ni par rapport au noeud source et l'identifiant Id du noeud voisin ainsi que l'ensemble des noeuds destinataires du flot. Pour un flot, pour un voisin donné, la valeur de distance la plus courte sera, par exemple, mémorisée.

Une valeur de temporisation optionnelle TTL (pour time to live) peut être transmise dans le parcours par inondation des flots, pour la suppression des informations après une temporisation de TTL unités de temps.

Dans cet exemple représenté à la figure 4, la partie du réseau comprend un premier noeud source S₁ du flot X₁, et un deuxième noeud source S₂ du flot X₂ et un premier noeud destinataire D et un deuxième noeud destinataire F des deux flots X₁ et X₂.

Sur la figure 4 en appliquant le parcours par flooding à partir des noeuds origines S₁ et S₂ des flots X₁ et X₂ (pour les noeuds S₁ et D) on obtient:
Noeud S₁ : Flot X₂ 2-C signifie que que le noeud S₁ est à une distance de 2 sauts du noeud source du Flot X₂, et que le noeud voisin permettant d'accéder au noeud initial de ce flot est le noeud C.Noeud D ; Flot X₁ 1-S₁, 3 E signifie qu'il est à un saut du noeud source S₁ par S₁ et à 3 sauts par le noeud voisin E et Flot X₂ 3-E-S₁ à 3 bonds du noeud origine du Flot X₂ par S₁ et par E.

La mémorisation de ces informations (identifiant d'un noeud, distance de ce noeud au noeud source pour un flot donné), peut être limitée en mémorisation de distance inférieure à une borne par paramétrage de l'algorithme de « flooding », sur la figure 4, cette valeur est de 3. Ce paramétrage peut dépendre des caractéristiques du flot en termes de respect de contraintes de qualité de service. Ces informations sont mémorisées et conservées avec une temporisation donnée en rapport avec le temps d'exécution du flot

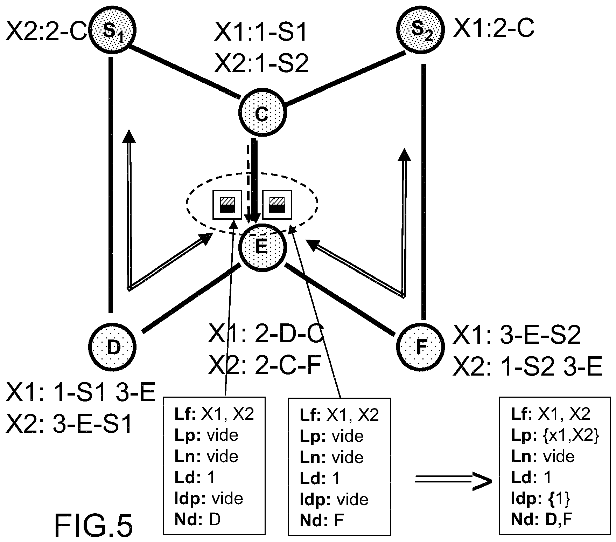

### Etape 2 (figures 5, 6, 7)

Le but de cette étape est de détecter ou d'identifier les noeuds qui pourront servir potentiellement de relais de n flots (dans l'exemple n=2) sur m noeuds destinataires (dans l'exemple m=2).

Chaque noeud destinataire de flots va, de façon périodique ou par demande utilisateur, transmettre des messages Mtopo à chacun des voisins candidats à être noeuds relais de plusieurs flots. Ces messages contiennent les flots pouvant transiter au niveau de noeuds. Ces informations sont obtenues par exploitation des informations de la table de stockage Tf des informations collectées à l'étape précédente. Ces messages sont transférés aux autres noeuds voisins présents marqués comme noeuds précédents pour les flots, les noeuds étant identifiés par leur identifiant unique.

Ces messages contiennent, par exemple, les informations suivantes:
- Une liste **Lf** de flots;
- Une liste **Lp** de liste de flots optimisables par codage réseau;
- Une liste **Lbidir** de valeurs de bidirectionnalité des flots (faux si les flots ne sont pas bidirectionnels, vrai s'ils sont bidirectionnels) de la liste **Lp**.
- Une liste de premiers noeuds **FirstCod** auquel s'applique le codage réseau de la liste **Lp**.
- Une liste **Nd** de listes de noeuds destinataires;
- Une liste **Ln** des noeuds parcourus, cette liste permet de coder des arborescences avec des étiquettes ou tag indiquant le début d'une arborescence et la fin du chemin de l'arborescence.
- Une liste **Lf** des flots traversés, flots du noeud terminal au noeud origine dans le chemin,

Des éléments collectés permettant aux noeuds sources de choisir les meilleurs chemins. Les éléments collectés ici sont les distances des chemins **Ld** et des chemins codables **Ldp** par codage réseau. Celles-ci peuvent être enrichis ou remplacés par d'autres critères (informations de qualité de service connus de l'Homme de métier par exemple),
- Une liste **Ld** de distances du chemin des flots de Lf,
- les distances **Ldp** de chemins avec codage par ensembles des chemins de Ln des flots listés dans la liste des flots optimisables Lp par codage réseau;

Dans le cas d'un protocole mettant en oeuvre une synchronisation le noeud E peut attendre tous les paquets des flots qu'il a reçus avant de remonter l'ensemble des flots en même temps au noeud précédent. Par exemple, dans la figure 5, le noeud E reçoit un message de D et un message de F.

### Par exemple,

E, S₁ reçoivent de D deux messages, respectivement un premier message de D et un deuxième message de F:
E, S₁ reçoivent de D :
   **Lf**: X₁, X₂
   **Lp** : vide
   **Ln** : vide
   **firstCod** : vide
   **Ld** : 1
   **Ldp** : vide
   **Nd** : D
   **Lft** : vide
E, S₂ reçoivent de F :
   **Lf** : X₁, X₂
   **Lp** : vide
   **Ln** : vide
   **firstCod** :vide
   **Ld** : vide
   **Ldp** : vide
   **dp** : vide
   **Nd** : F
   **Lft** : vide

Dans le cas d'un protocole ne mettant pas en oeuvre un mécanisme de synchronisation pour la diffusion des différents flots, le noeud recevant des informations, peut les transmettre au fur et à mesure qu'elles lui arrivent.

Une mémorisation de ces informations permet de transmettre des informations concaténées. E déduit qu'il peut être noeud pivot car :
- Il reçoit de deux voisins différents au moins 2 flots (liste **Lf**) communs,
- Il émet sur des chemins distincts (pas de noeud de chemins communs) des flots codés.

Sur réception du deuxième message reçu, le noeud E transmet aux noeuds associés aux flots dans **Tf** (noeud C dans l'exemple) un message Mp informant que **E** est noeud pivot Np. Pour les noeuds voisins non encore parcourus pour la remontée de signalisation, si ceux-ci sont identifiés par la première étape initiale comme noeuds précédents de ces flots, ceux-ci sont déterminés comme noeuds pivots (valeur Ld incrémentée, nombre de noeuds du chemin des flots de Lf avec codage réseau) dans le message transmis par le noeud E au noeud C.

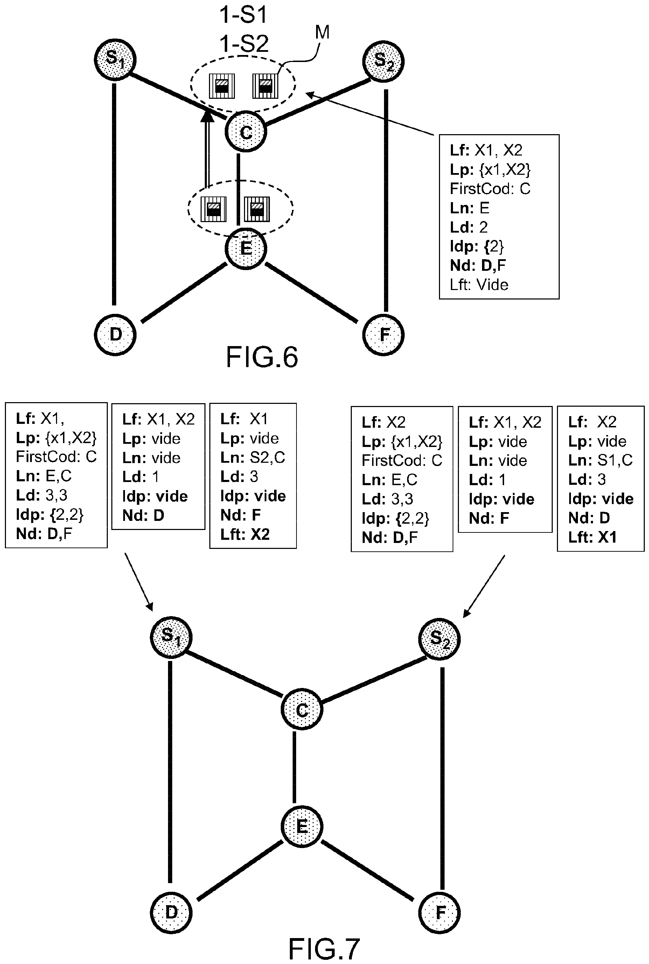

Les figures 6 et 7 schématisent la remontée des informations vers les noeuds sources S₁, S₂.

Un noeud est défini comme noeud pivot s'il reçoit d'au moins 2 voisins différents un message l'identifiant comme pouvant faire transiter plusieurs flots communs à ces deux voisins. Cette information va être transmise à tous les noeuds dans le voisinage.

Dans l'exemple de la figure 5, le noeud E, qui reçoit des informations des noeuds distincts D et F comme pouvant transiter les deux Flots X₂ et X₁ sur ces noeuds est un noeud pivot Np pour ces deux noeuds. Il s'agit d'un noeud où soit le codage réseau de ces flots peut potentiellement être réalisé, soit un flot issu du codage de ces flots être transité par ce noeud.

### Etape 3 (figure 6)

Les messages de transmissions de flot reçus d'un voisin sont transmis aux autres voisins pour lesquels une association a été mémorisée dans la table Tf. Un noeud déterminé comme pivot de flots retourne cette information dans le message dans le champ Lp à chaque noeud contenu dans la liste d'un de ces flots de la table Tf. Chacun des noeuds No recevant les flots Xk va transmettre aux noeuds voisins les informations contenues dans le message Mtopo qui sont transmises de gré à gré en identifiant les chemins Ci sur lesquels pourra être potentiellement appliqué un codage réseau.

| C reçoit de E : | | C reçoit de S₁ : | C reçoit de S₂ |
|---|---|---|---|
| **Lf** : X₁,X₂ | **Lf** :X₁,X₂ | **Lf** : X₂ | **Lf** : X₁ |
| **Lp** : vide | **Lp** :{X₁,X₂} | **Lp** : vide, | **Lp** : vide, |
| **FirstCod** : vide | **FirstCod** :C | **FirstCod** : vide | **FirstCod**: vide |
| **Ld** : 2 | **Ld** :2 | **Ld** :2 | **Ld** : 2 |
| **Ldp** : vide | **Ldp** :2 | **Ldp** :vide | **Ldp** :vide |
| **Nd**: D | **Nd** :D,F | **Nd**: D | **Nd**:F |
| **Ln:** E | **Ln**:E | **Ln**:S₁ | **Ln**:S₂ |
| **Lft:** vide | **Lft** :vide | **Lft** :X1 | **Lft** : X₂ |

Le deuxième message transmis de C par E résulte de la réception des deux messages de D et F vers E, qui permettent au niveau du noeud E de déterminer qu'il est noeud pivot pour les trafics X₁ et X₂.
C transmet à S₁

| | |
|---|---|
| **Lf** : X₁, | **Lf** : X₁ |
| **Lp** : {X₁,X₂} | **Lp**: vide, |
| **FirstCod** :C | **FirstCod** :vide |
| **Ld:** 3, | **Ld**: 3 |
| **Ldp:** 2 | **Ldp**: vide |
| **Nd:** D,F | **Nd**: F |
| **Ln**: C,E | **Ln:** C, S₂ |
| **Lft:** vide | **Lft:** X₂ |

C transmet à S₂

| | |
|---|---|
| **Lf** : X₂, | **Lf** : X₂ |
| **Lp** : {X₁,X₂} | **Lp**: vide, |
| **FirstCod**: C | **FirstCod**: vide |
| **Ld**:2, | **Ld**: 3 |
| **Ldp**:2 | **Ld**=vide |
| **Nd**:D, F | **Nd** = D |
| **Ln**: C,E | **Ln :** C,S₁ |
| **Lft :** vide | **Lft :** X₁ |

### Etape 4 (figure 7)

Les identifiants correspondant aux noeuds qui se sont identifiés comme noeuds pivots sont remontés aux noeuds sources Ns. Ces noeuds sources vont prévenir les noeuds destinataires de la réception de ces informations en utilisant le protocole de routage. Puis les noeuds sources prennent la décision de réaliser un changement de flots ou de trafic et proposer à un ou plusieurs noeuds pivots d'utiliser du codage réseau pour au moins deux flots afin de générer un seul flot pour transmission au noeud destinataire.

Grâce aux informations reçues par S₁ et S₂, S₁ (respectivement S₂) peut déterminer que C, E, peuvent potentiellement être des noeuds pivots pour le flot X₁ (initiés par S₁) et le flot X₂ (initiés par S₂), car D et F sont destinataires communs de X₁ et X₂ et il existe un chemin distinct de S₁ (respectivement S₂) accédant à un des noeuds destinataire D (respectivement F).

La décision d'effectuer du codage réseau pourra être prise en prenant en compte, par exemple, la contrainte requise au niveau du trafic (latence, capacité d'allouer des ressources, stabilité des liens dans le réseau).

Une décision de codage est potentiellement réalisable dès qu'au niveau d'un noeud, dans le cas de gestion de 2 flots il existe un chemin C₁ de routage du flot avec une potentialité de codage réseau par un flot et un chemin C₂ de routage du flot avec transfert du flot du noeud origine distinct de la route C₂.

La décision de codage effective au niveau du premier noeud pivot se réalisera si le noeud pivot reçoit une demande de codage par les deux noeuds initiaux. Les noeuds initiaux ont la connaissance réciproque d'un chemin C2, par l'information des listes **Lft** (des flots traversés, flots du noeud terminal au noeud origine dans le chemin).

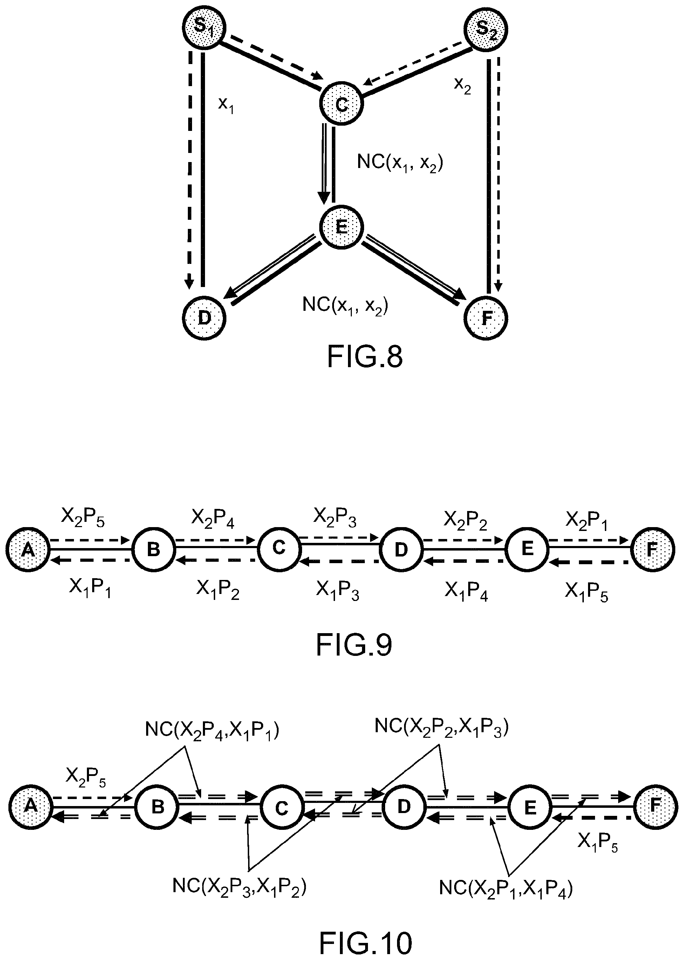

### Etape 5 (figure 8)

La cinquième étape concerne l'application du codage réseau, para exemple de type Network coding, sur un chemin commun et le décodage des informations au niveau des noeuds destinataires qui auront reçu d'une par un flot initial non codé et d'autre part un flot codé comprenant un codage de l'ensemble de deux flot au moins, dans notre exemple cela correspond au flot X₁ et X₂.

### Etablissement de la route complète

S₁ (respectivement S₂) transmettent au noeud C des messages MFlowEstab contenant :
- L'identifiant du flot issu du noeud origine, et tout autre paramètres associés à ce flot connu de l'Homme de métier permettant d'initier le trafic du flot.
- L'information d'autorisation ou non de codage réseau avec les flots à encoder. Cod
- La valeur du premier noeud utilisé pour le codage réseau FirstCod
- Une valeur booléenne ApplyCoding indiquant si le codage réseau est applicable au noeud qui reçoit le message MFlowEstab,
- l'information des noeuds de l'arborescence des routes à initier pour le routage afin d'accéder à tous les noeuds destinataires. .LRoute : C,E,D <tag> F, qui code les chemins C,E,D et C,E,F, <tag> étant un identifiant qui n'est pas affecté à un noeud et sert de valeur de coupure pour le codage d'un arbre en liste.
Chacun des noeuds en recevant le message:
- alloue en interne les ressources permettant d'établir un trafic avec le noeud duquel il reçoit le message, procédure identique à l'établissement classique d'un trafic dans un réseau ad-hoc connu de l'Homme de métier.
- Supprime son identifiant de LRoute, décrémente et transmet le message au(x) noeud(s) suivant(s) dans l'arborescence de chemins codés dans LRoute.

Si l'identifiant du noeud FirstCod est le noeud courant, ou si la valeur ApplyCoding du message MFlowEstab est à vrai, celui-ci mémorise cette information de manière à coder les paquets de ces 2 flots. Il transmet le message MFlowEstab, en affectant la valeur vrai au champ ApplyCoding.

Si les noeuds initiaux des trafics (ici S₁ et S₂) autorisent le trafic et que l'accès par des noeuds destinataires par les noeuds initiaux permet le décodage réseau au niveau des noeuds destinataires, S₁ (respectivement S₂) transmet au noeud D (respectivement F), l'information d'établissement de flot X₁ (respectivement X₂) avec décodage avec les informations transmises par le noeud E.

### Application des trafics avec codage et décodage réseau:

Lors de l'établissement des trafics, pour les noeuds identifiés comme premiers noeud du chemin réalisant un codage réseau entre plusieurs flots, si les paquets d'un seul flot sont reçus, ceux ci sont transmis tel quels. Si les paquets de plusieurs flots sont reçus, ceux-ci sont transmis codés par codage réseau ; Si un flot de trafic termine, les paquets de l'autre flot seront transmis sans codage. La réception de 2 flots s'entend comme la réception de paquets de 2 flots dans une durée de temps permettant de transmettre ensuite le message codé des 2 trafics sans altérer les contraintes temps réels associés à ces flots.

Dans l'entête du paquet de données sont indiqués l'identifiant du flot ou des flots, les identifiants de paquets des flots en cas de plusieurs flots, le type de codage, lorsque celui-ci n'est pas connu des noeuds destinataires. Les noeuds autres que les noeuds initiateur de codage relayent les paquets sans modifier leur contenu. Les noeuds destinataires décodent les paquets reçus de plusieurs chemins.

### Extension de la définition des noeuds origine et destination pour application aux flots bi directionnels avec relais décrite en relation aux figures 9 à 13.

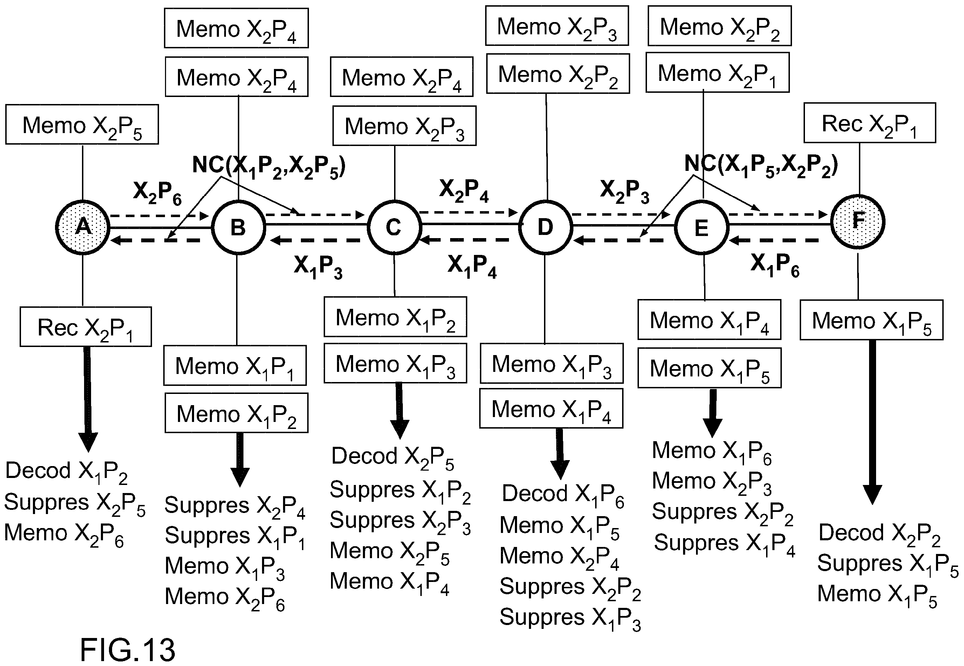

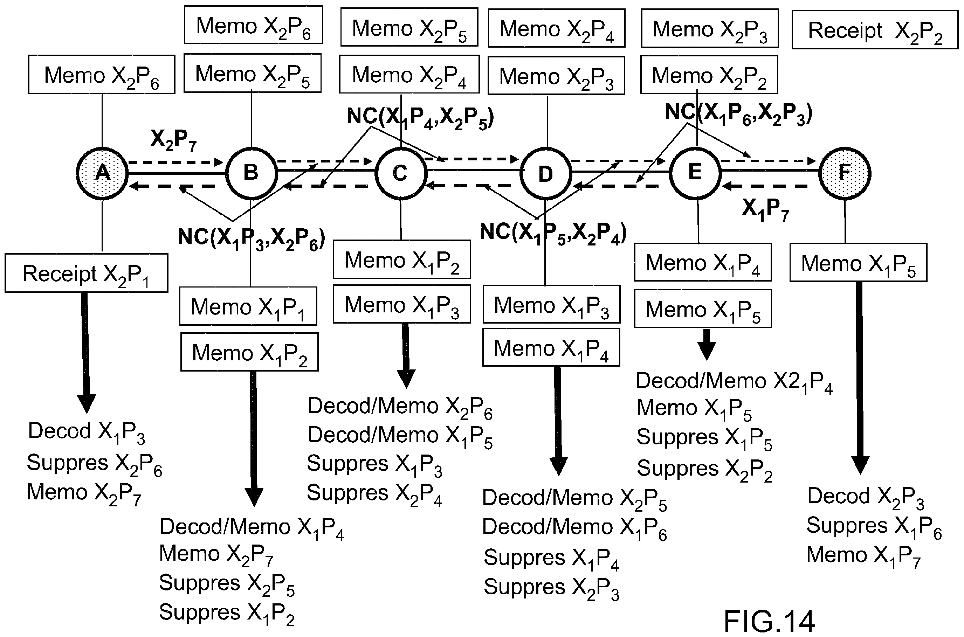

Par la suite XᵢPⱼ caractérise le paquet j du flot de données Xᵢ. Memo XᵢPⱼ pour un noeud NN caractérise la mémorisation du paquet j du flot de données Xᵢ dans le noeud NN. Suppress XᵢPⱼ pour un noeud NN caractérise sa suppression. Decod XᵢPⱼ caractérise son décodage. NC(XᵢPⱼ, XₖPₗ) caractérise le codage réseau du paquet j de données du flot du flot de données Xᵢ avec le paquet I de données du flot du flot de données Xₖ. Ces définitions sont toujours valables pour les figures 13, 14.

Dans ces exemples, la définition des noeuds initiaux et finaux est étendue aux noeuds initiaux et finaux de flots bidirectionnels, lettre b sur les figures; dans ce cas les messages M transmis intègrent les flots X₁ et X₂ dans la liste Lf.

Dans l'exemple de la figure 9, les noeuds A et F sont considérés comme noeuds initiaux et finaux; dans ce cas les messages MTopo transmis intègrent X₁ et X₂ dans la liste Lf. Ces paquets sont transmis de A à F et de F à A. Les noeuds relais recevant des paquets de deux noeuds distincts sont des noeuds pivots de ces deux flots. Ces noeuds échangés de ces 2 flots étant bidirectionnels, les noeuds pivots coderont et décoderont les paquets reçus comme indiqué en figure 10.

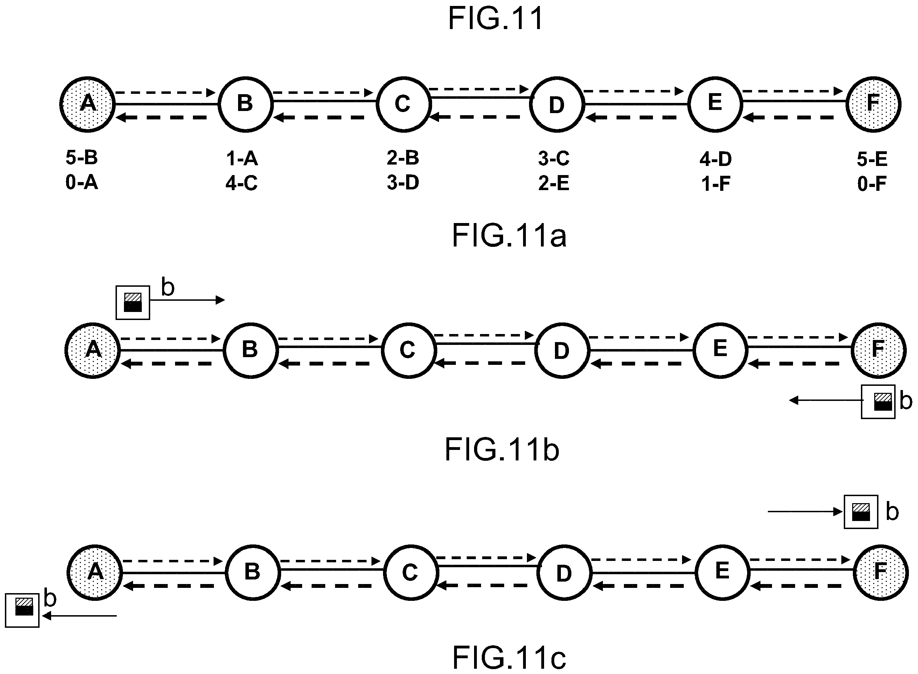

La phase 1 appliquée à cette topologie permet de mémoriser les informations sur chacun des noeuds comme présenté en figure 11-a. Les noeuds initiaux A et F transmettent les messages MTopo, en indiquant qu'il s'agit d'un flot bidirectionnel (champ LBidir à vrai pour les flots {X₁,X₂} de Lp. A la réception des 2 messages venant des 2 noeuds initiaux les noeuds relais allouent de la mémoire afin de mémoriser les 2 paquets précédents des 2 flots.

Lorsque 2 paquets de trafics sont mémorisés pour les 2 trafics pour les noeuds FirstCod des messages mFlowEstab des deux flots codent les paquets reçus et les transmettent. Par la suite, tout noeud qui reçoit un paquet codé, le décode afin d'avoir la valeur des paquets des flots à mémoriser à remplacer au paquet du flot correspondant le plus anciennement mémorisé. Cette phase est décrite dans l'exemple par la figure13.

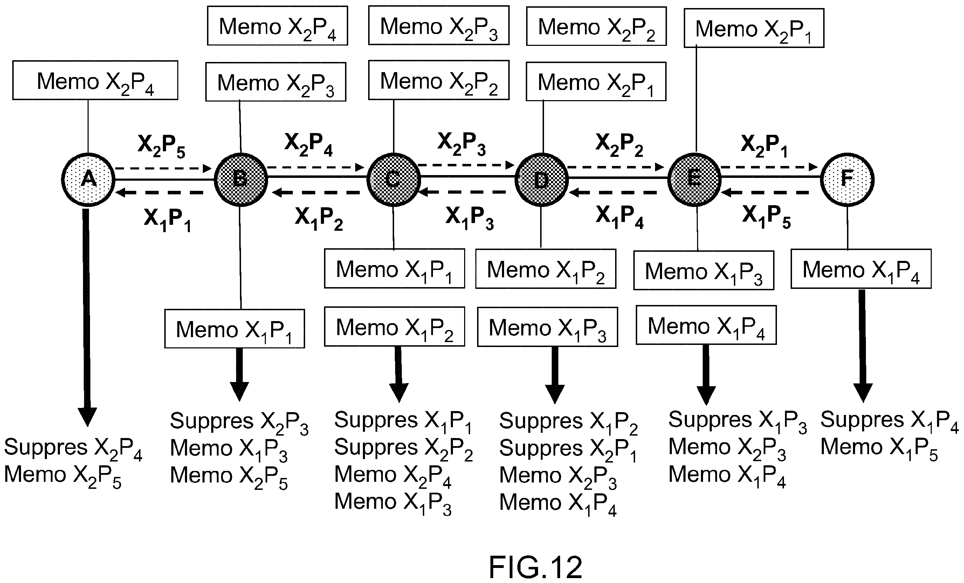

Chacun des noeuds définis comme pivot mémorisent les 2 derniers paquets reçus des 2 flots. Les noeuds voisins des noeuds initiaux initient la phase de codage. Les figures 12 et 13 décrivent l'initialisation de la procédure de mémorisation des paquets sur les noeuds et décodage à partir des noeuds les plus proches des noeuds initiaux des trafics. Comme indiqué en figure 14, chaque relais code et décode les paquets reçus.

### Détermination d'utilisation de chemins pivots lors de multi-choix:

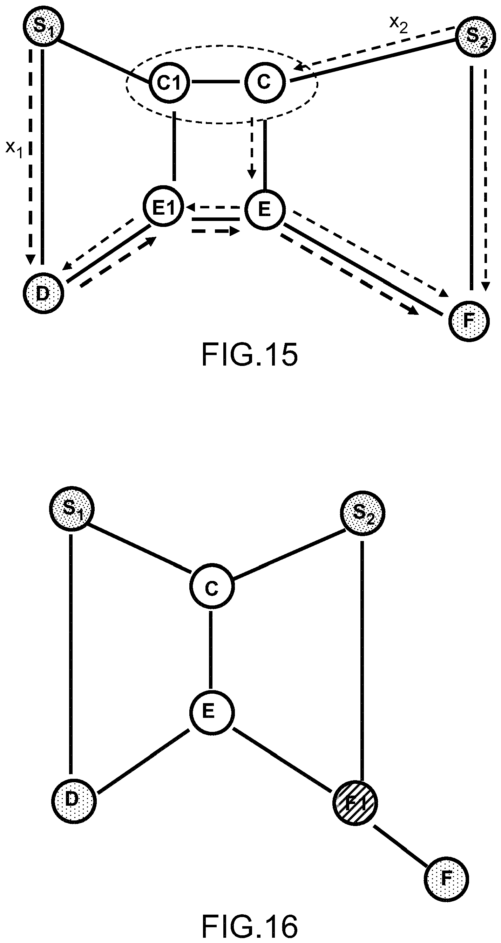

La figure 15 illustre la capacité de choix de plusieurs chemins pivots. Plusieurs alternatives sont possibles. Le premier choix est la capacité de choix déterministe d'un des deux chemins (par exemple en se basant sur une relation d'ordre de comparaison de l'identifiant du premier noeud, au cas ou aucun autre critère tel que la taille du chemin pivot, ou une métrique sur des paramètres de qualité de service ne permet de les distinguer). Une autre alternative est de profiter de l'opportunité de 2 chemins pivots pour transférer 2 flots (ou de diviser un flot en deux) pour utiliser à plein les capacités de network coding sur les 2 flots.

### Extension de la définition de noeuds origine et destination

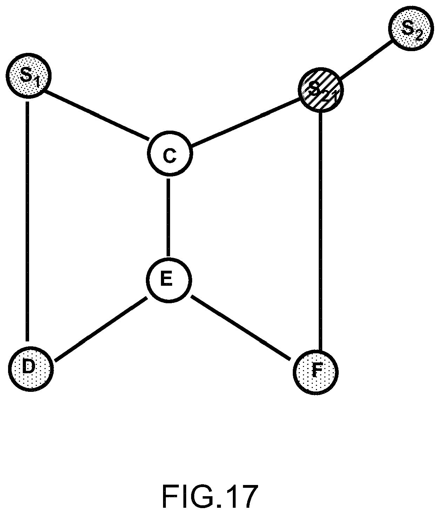

Les figures 16 et 17 illustrent l'extension de la notion de noeuds initiaux et finaux, tel que défini initialement. Ces extensions par rapport à la définition initiale permettent d'étendre les situations topologiques dans lesquelles l'invention est applicable.

### Noeud initial par délégation:

La figure 16 reprend la topologie des figures 4 à 8 utilisés pour illustrer l'invention avec la modification suivante : le noeud initial S₂ du flot X₂ délègue la capacité d'annoter la liste Lft au noeud S₂₁. La distance au noeud initial peut être un critère de choix de ces noeuds par délégation. Cette délégation d'annotation de la liste Lft permet d'étendre les topologies dans lesquelles peuvent être appliquées le codage réseau.

### Noeud destination par délégation:

La figure 17 reprend la topologie des figures 4 à 8 utilisés pour illustrer l'invention avec la modification suivante : le noeud final F, éventuellement destinataire d'un seul flot, délègue à un noeud F₁ duquel peuvent transiter plusieurs flots, la capacité de transmettre les messages par délégation.

### Couplage avec des directives d'allocation de ressource:

Le protocole proposé par l'invention permet de prévoir les communications de plusieurs flots d'une topologie donnée, donc des besoins de ressources à allouer en débit, bande passante, connectivités à optimiser. En plus du chemin de flot et de décisions de codage réseau sur certaines parties de ces chemins, le noeud initial peut transmettre des directives à chacun des noeuds, afin qu'ils optimisent leurs allocations de ressources.

### Extension à des traitements multi-flots autres que par codage réseau :

Il se peut que la topologie ne permette pas de réaliser le codage réseau, notamment en cas de non présence de chemins distincts d'accès aux noeuds destinataires. D'autres types d'optimisations, sont applicables, par exemple en concaténant plusieurs paquets de plusieurs flots en un seul. Le protocole proposé permet de déterminer ces situations, ce qui revient à déterminer les chemins pivots.

Le procédé et le réseau mettant en oeuvre le procédé selon l'invention offrent notamment les avantages suivants :
- une optimisation en débit par réduction du nombre d'envoi de paquets de trafic, sans augmentation de taille de données de ces paquets,
- la possibilité d'adapter les choix de routage en fonction de la potentialité de gains par utilisation de codage réseau par identification des situations topologiques dans lequel le réseau peut être utilisé,
- la prise en compte de la modification de route de flots ou flot existants pour profiter du codage réseau lors de l'établissement d'autres flots,
- la possibilité d'utiliser le codage réseau dans des situations générales prenant en compte l'établissement asynchrone de flots, et optimisant un routage de type réactif pour profiter des optimisations, notamment en débit qu'apporte le codage réseau.

## Revendications

1. Procédé pour optimiser l'adaptation de routes de communication dans un réseau sans fil composé de noeuds de communications, ledit réseau comprenant plusieurs noeuds, la transmission de données de trafic s'effectuant sous la forme de flots et entre au moins deux noeuds sources Ns et au moins deux noeuds destinataires Nd, comportant les étapes suivantes :
• étape 1, une étape de diffusion d'un premier message M d'un noeud source Si, Ns, vers tous les autres noeuds du réseau, pour la découverte de plusieurs chemins Ci ou routes susceptibles d'être utilisés,
• sur réception du message M un noeud du réseau mémorise pour chacun des flot qu'il reçoit, la distance NN du noeud par rapport au noeud source Ns ou au noeud précédent émetteur dudit flot, afin de générer une table Tf pour chaque parcours Ci de chemin initié par le noeud source Ns de chaque flot venant de ses noeuds voisins, la distance au noeud source et l'identifiant Id du noeud voisin,
• étape 2, chaque noeud destinataire Nd de flots, transmet des messages Mtopo à chacun des noeuds voisins candidats à être relais de plusieurs flots, lesdits messages Mtopo contenant des informations obtenues par exploitation des informations de la table de stockage des informations collectées à l'étape 1,
• étape 3, chacun des noeuds recevant les flots transmet aux noeuds voisins lesdites informations contenues dans ledit message Mtopo, lesdites informations étant transmises de gré à gré en identifiant les chemins Ci sur lesquels un codage réseau pourra être appliqué,
• un noeud E s'identifie comme noeud pivot, s'il reçoit d'au moins un premier noeud voisin destinataire D un premier flot X₁, d'un deuxième noeud destinataire F différent du premier noeud destinataire D un deuxième flot X₂, le premier flot et le deuxième flot étant contenus dans une liste de flot Lf et s'il émet sur des chemins distincts des flots codés et sur réception d'un deuxième message émis par le deuxième noeud destinataire D, ledit noeud transmet aux noeuds associés aux flots dans Tf un message Mp information qu'un noeud E est noeud pivot Np, ledit noeud pivot transmettant son identifiant Idp aux autres noeuds en utilisant un protocole de routage,
• étape 4, les identifiants correspondant aux noeuds qui se sont identifiés comme noeuds pivots sont transmis aux noeuds sources Ns qui vont prévenir les noeuds destinataires en utilisant le protocole de routage,
• puis les noeuds sources Ns prennent la décision de réaliser un changement de flots ou de trafics et de proposer à un ou plusieurs noeuds pivots d'utiliser du codage réseau à au moins deux flots afin de générer un seul flot pour la transmission à un noeud destinataire.

2. Procédé selon la revendication 1 **caractérisé en ce qu'**un message Mtopo contient au moins les éléments suivants:
• Une liste **Lf** de flots;
• Une liste **Lp** de liste de flots optimisables par codage réseau;
• Une liste LBidir des flots de Lp bidirectionnels
• Une liste FirstCod du premier noeud auquel appliquer un codage réseau
• Une liste **Nd** de liste de noeuds destinataires;
• Une liste **Ln** des noeuds parcourus, permettant de coder des arborescences avec des étiquettes indiquant le début d'une arborescence et fin du chemin de l'arborescence,
• Une liste Ltf des flots entièrement parcourus dans des chemins de l'arborescence Ln.
• Des informations collectées permettant de déterminer le choix des routes.

3. Procédé selon la revendication 2 **caractérisé en ce que** les informations collectées comportent au moins les éléments suivants :
• Les distances des chemins **Ld**,
• Des chemins codables **Ldp** par codage réseau.

4. Procédé selon l'une des revendications 1 à 3 **caractérisé en ce que** la transmission des informations est bidirectionnelle et **en ce que** ledit procédé comporte une étape au cours de laquelle il y a mémorisation des paquets transmis pour codage et décodage sur les noeuds relais.

5. Procédé selon l'une des revendications 1 à 3 **caractérisé en ce qu'**il comporte des phases de mémorisation, codage et décodage de paquets de trafic sur une topologie de réseau de flots bidirectionnels entre 2 noeuds du réseau, lors de l'établissement des communications avec optimisation par codage réseau.

6. Procédé selon la revendication 3 **caractérisé en ce qu'**un noeud source ou noeud initial S₂ du flot X₂ délègue sa capacité d'annoter la liste Lft des flots traversés à un autre noeud.

7. Procédé selon l'une des revendications 1 à 5 **caractérisé en ce qu'**un noeud destinataire ou final F délègue à un autre noeud F₁ duquel peuvent transiter plusieurs flots, sa capacité de transmettre des messages.

8. Procédé selon l'une des revendications 1 à 3 **caractérisé en ce qu'**il comporte la possibilité de choisir entre plusieurs chemins pivots en utilisant un choix déterministe ou en profitant d'une opportunité de 2 chemins pivots pour transférer deux flots.

9. Procédé selon l'une des revendications 1 à 3 **caractérisé en ce qu'**un noeud source transmet des directives d'optimisation d'allocation de ressources à chacun des noeuds du réseau.

10. Architecture de réseau permettant d'optimiser l'adaptation de routes de communication dans un réseau composé de noeuds de communications sans fil, ledit réseau mettant en oeuvre un algorithme de routage, ledit réseau comprenant plusieurs noeuds Ni, la transmission de données s'effectuant entre au moins deux noeuds sources Ns et au moins deux noeuds destinataires Nd, lesdits noeuds Ns, Nd, Ni disposant de moyens émetteur, récepteur et des moyens de traitement des informations mettant en oeuvre les étapes du procédé selon l'une des revendications 1 à 9.

## Patentansprüche

1. Verfahren zum Optimieren der Adaption von Kommunikationswegen in einem drahtlosen Netz, das aus Kommunikationsknoten zusammengesetzt ist, wobei das Netz mehrere Knoten umfasst, wobei die Übertragung von Verkehrsdaten in Form von Strömen zwischen wenigstens zwei Quellknoten Ns und wenigstens zwei Zielknoten Nd erfolgt, das die folgenden Schritte beinhaltet:
• Schritt 1: einen Schritt des Verteilens einer ersten Nachricht M von einem Quellknoten Si, Ns zu allen anderen Knoten des Netzes, um mehrere Wege Ci oder Routen zu entdecken, die benutzt werden können,
• Speichern durch einen Knoten des Netzes, nach dem Empfang der Nachricht M, für jeden von ihm empfangenen Strom, der Distanz NN des Knotens mit Bezug auf den Quellknoten Ns oder den vorherigen Sendeknoten des Stroms, um eine Tabelle Tf für jeden Wegverlauf Ci zu erzeugen, der am Quellknoten Ns jedes von seinen Nachbarknoten kommenden Stroms beginnt, der Distanz zum Quellknoten und der Kennung Id des Nachbarknotens,
• Schritt 2: jeder Zielknoten Nd von Strömen überträgt Nachrichten Mtopo zu jedem der Kandidatennachbarknoten, die potenzielle Relais von mehreren Strömen sind, wobei die Nachrichten Mtopo Informationen enthalten, die durch Nutzen von Informationen der Speichertabelle der in Schritt 1 gesammelten Informationen erhalten werden,
• Schritt 3: jeder der die Ströme empfangenden Knoten überträgt die in der Nachricht Mtopo enthaltenen Informationen zu den Nachbarknoten, wobei die Informationen nach Vereinbarung durch Identifizieren der Wege Ci gesendet werden, auf denen eine Netzcodierung angewandt werden kann,
• ein Knoten E erweist sich dann als Drehpunktknoten, wenn er von wenigstens einem ersten Zielnachbarknoten D einen ersten Strom X₁, von einem zweiten Zielknoten F, der sich vom ersten Zielknoten D unterscheidet, einen zweiten Strom X₂ empfängt, wobei der erste Strom und der zweite Strom in einer Stromliste Lf enthalten sind, und wenn er auf getrennten Wegen codierte Ströme sendet, und nach Empfang einer vom zweiten Zielknoten D gesendeten zweiten Nachricht, dann überträgt der Knoten eine Informationsnachricht Mp zu den mit den Strömen in Tf assoziierten Knoten, dass ein Knoten E ein Drehpunktknoten Np ist, wobei der Drehpunktknoten seine Kennung Idp zu den anderen Knoten mittels eines Routing-Protokolls überträgt,
• Schritt 4: die Kennungen, die den Knoten entsprechen, die sich als Drehpunktknoten erwiesen haben, werden zu den Quellknoten Ns übertragen, die mittels des Routing-Protokolls die Zielknoten benachrichtigen,
• dann entscheiden die Quellknoten Ns, eine Änderung von Strömen oder von Verkehr zu realisieren und einem oder mehreren Drehpunktknoten vorzuschlagen, Netzcodierung zu wenigstens zwei Strömen zu benutzen, um einen einzigen Strom für die Übertragung zu einem Zielknoten zu erzeugen.

2. Verfahren nach Anspruch 1, **dadurch gekennzeichnet, dass** eine Nachricht Mtopo wenigstens die folgenden Elemente enthält:
• eine Liste **Lf** von Strömen;
• eine Liste **Lp** von Strömen, die durch Netzcodierung optimierbar sind;
• eine Liste **LBidir** von bidirektionalen Strömen von Lp
• eine Liste **FirstCod** des ersten Knotens, auf den eine Netzcodierung anzuwenden ist
• eine Liste **Nd** von Zielknoten;
• eine Liste **Ln** von durchlaufenen Knoten, die die Codierung der Baumstrukturen mit Etiketten zulässt, die den Anfang einer Baumstruktur und das Ende des Weges der Baumstruktur anzeigen,
• eine Liste **Ltf** von völlig durchlaufenen Strömen in Wegen der Baumstruktur Ln;
• wobei die gesammelten Informationen eine Bestimmung der Wahl der Routen zulässt.

3. Verfahren nach Anspruch 2, **dadurch gekennzeichnet, dass** die gesammelten Informationen wenigstens die folgenden Elemente beinhalten:
• die Distanzen von Wegen **Ld**,
• codierbare Wege **Ldp** durch Netzcodierung.

4. Verfahren nach einem der Ansprüche 1 bis 3, **dadurch gekennzeichnet, dass** das Übertragen von Informationen bidirektional ist, und dadurch, dass das Verfahren einen Schritt beinhaltet, bei dem Pakete gespeichert werden, die zum Codieren oder Decodieren auf den Relais-Knoten übertragen wurden.

5. Verfahren nach einem der Ansprüche 1 bis 3, **dadurch gekennzeichnet, dass** es Phasen des Speicherns, Codierens und Decodierens von Paketen von Verkehr auf einer Netztopologie von bidirektionalen Strömen zwischen zwei Knoten des Netzes beinhaltet, während der Einrichtung von Kommunikationen mit Optimierung durch Netzcodierung.

6. Verfahren nach Anspruch 3, **dadurch gekennzeichnet, dass** ein Quellknoten oder ein Anfangsknoten S₂ des Stroms X₂ seine Kapazität zum Annotieren der Liste **Lft** von durchgelaufenen Strömen an einen anderen Knoten delegiert.

7. Verfahren nach einem der Ansprüche 1 bis 5, **dadurch gekennzeichnet, dass** ein Ziel- oder Endknoten F seine Kapazität zum Übertragen von Nachrichten an einen anderen Knoten F₁ delegiert, von dem mehrere Ströme transportiert werden können.

8. Verfahren nach einem der Ansprüche 1 bis 3, **dadurch gekennzeichnet, dass** er die Möglichkeit des Auswählens zwischen mehreren Drehpunktwegen unter Nutzung einer deterministischen Wahl oder unter Ausnutzung einer Möglichkeit von 2 Drehpunktwegen zum Transferieren von zwei Strömen beinhaltet.

9. Verfahren nach einem der Ansprüche 1 bis 3, **dadurch gekennzeichnet, dass** ein Quellknoten Ressourcenzuordnungsoptimierungsrichtlinien zu jedem der Knoten des Netzes sendet.

10. Netzarchitektur, die eine Optimierung der Adaption von Kommunikationsrouten in einem Netz zulässt, das aus drahtlosen Kommunikationsknoten zusammengesetzt ist, wobei das Netz einen Routing-Algorithmus implementiert, wobei das Netz mehrere Knoten Ni umfasst, wobei das Übertragen von Daten zwischen wenigstens zwei Quellknoten Ns und wenigstens zwei Zielknoten Nd erfolgt, wobei die Knoten Ns, Nd, Ni Sende-, Empfangs- und Informationsverarbeitungsmittel zum Ausführen der Schritte des Verfahrens nach einem der Ansprüche 1 bis 9 umfassen.

## Claims

1. A method for optimizing the adaptation of communication routes in a wireless network consisting of communication nodes, said network comprising several nodes, the transmission of stream data being carried out in the form of flows and between at least two source nodes Ns and at least two destination nodes Nd, having the following steps:
• step 1, a step of broadcasting a first message M from a source node Si, Ns to all the other nodes of the network, in order to discover several paths Ci or routes capable of being used,
• on receipt of the message M a node of the network stores, for each of the flows that it receives, the distance NN of the node in relation to the source node Ns or to the preceding node sending said flow, in order to generate a table Tf for each path traversal Ci initiated by the source node Ns for each flow coming from its neighbor nodes, the distance to the source node and the identifier Id of the neighbor node,
• step 2, each destination node Nd for flows, transmits messages Mtopo to each of the neighbor nodes that are candidates to be a relay for several flows, said messages Mtopo containing information obtained by making use of the information in the table for storing the information collected in step 1,
• step 3, each of the nodes receiving the flows transmits to the neighbor nodes said information contained in said message Mtopo, said information being transmitted by mutual agreement by identifying the paths Ci on which network coding will be able to be applied,
• a node E identifies itself as a pivot node if it receives from at least a first destination neighbor node D a first flow X₁, from a second destination node F different from the first destination node D a second flow X₂, the first flow and the second flow being included in a flow list **Lf** and if it sends coded flows on separate paths, and on receipt of a second message emitted by the second destination node D, said node transmits to the nodes associated with the flows in Tf a message Mp informing that a node E is a pivot node Np, said pivot node transmitting its identifier Idp to the other nodes using a routing protocol,
• step 4, the identifiers corresponding to the nodes that have identified themselves as pivot nodes are transmitted to the source nodes Ns, which will alert the destination nodes using the routing protocol,
• then the source nodes Ns take the decision to make a change of flows or of streams and to propose to one or more pivot nodes that they use network coding for at least two flows in order to generate a single flow for the transmission to a destination node.

2. The method as claimed in claim 1, **characterized in that** a message Mtopo contains at least the following elements:
• a list **Lf** of flows;
• a list **Lp** of lists of flows that can be optimized by network coding;
• a list **LBidir** of the bidirectional flows from **Lp**;
• a list **FirstCod** of the first node to which network coding should be applied;
• a list **Nd** of lists of destination nodes;
• a list **Ln** of the nodes traversed, making it possible to code trees with tags indicating the start of a tree and the end of the path of the tree;
• a list **Ltf** of the flows entirely traversed in paths of the tree Ln.
• collected information making it possible to determine the choice of routes.

3. The method as claimed in claim 2, **characterized in that** the collected information has at least the following elements:
• the path distances **Ld**,
• paths **Ldp** that can be coded by network coding.

4. The method as claimed in one of claims 1 to 3, **characterized in that** the transmission of the information is bidirectional and **in that** said method has a step involving storage of the transmitted packets for coding and decoding on the relay nodes.

5. The method as claimed in one of claims 1 to 3, **characterized in that** it has phases of storage, coding and decoding of stream packets on a network topology of bidirectional flows between 2 nodes of the network, during the setup of communications with optimization by network coding.

6. The method as claimed in claim 3, **characterized in that** a source node or initial node S₂ for the flow X₂ delegates its capability to annotate the list **Lft** of the flows crossed to another node.

7. The method as claimed in one of claims 1 to 5, **characterized in that** a final or destination node F delegates to another node F₁, from which several flows can transit, its capability to transmit messages.

8. The method as claimed in one of claims 1 to 3, **characterized in that** it has the possibility of choosing between several pivot paths by using a deterministic choice or by taking advantage of an opportunity in 2 pivot paths in order to transfer two flows.

9. The method as claimed in one of claims 1 to 3, **characterized in that** a source node transmits resource allocation optimization directives to each of the nodes in the network.

10. A network architecture making it possible to optimize the adaptation of communication routes in a network consisting of wireless communication nodes, said network implementing a routing algorithm, said network comprising several nodes Ni, the transmission of data being carried out between at least two source nodes Ns and at least two destination nodes Nd, said nodes Ns, Nd, Ni having access to means for sending and receiving and means for processing the information implementing the steps of the method as claimed in one of claims 1 to 9.
